# EUROPÄISCHE PATENTANMELDUNG

(11) **EP 1 227 427 A1**
(43) Veröffentlichungstag der Anmeldung: **31.07.2002**
(21) Anmeldenummer: 01127031.1
(22) Anmeldetag: 14.11.2001
(51) Int. Cl.: G06K 7/00, G06K 7/10, G06K 7/08, H01Q 1/27, A41D 19/00

(54) **Tragbare Transponderleseeinrichtung**

(30) Priorität: 26.01.2001 DE 10103531
(71) Anmelder: MOBA-Mobile Automation GmbH, 01159 Dresden (DE)
(72) Erfinder: Harms, Volker, Fayetteville, GA 30215 (US); Schmidt, Andreas, 01309 Dresden (DE)
(74) Vertreter: Schoppe, Fritz, Dipl.-Ing.

(57) **Zusammenfassung**

Eine tragbare Transponderleseeinrichtung weist einen Handschuh (1) und eine Lesevorrichtung auf. Der Handschuh (1) umfaßt eine Antenneneinrichtung (2), die eine Antenne aufweist, die in ein Material des Handschuhs (1) eingebracht ist. Die Lesevorrichtung, die an einem Körperteil eines Benutzers lösbar befestigt sein kann, ist mit der Antenneneinrichtung (2) verbunden. Wahlweise kann die Transponderleseeinrichtung ferner einen Taster aufweisen, der von einem Finger (3) des Benutzers betätigbar ist, um einen Identifizierungsvorgang auszulösen.

## Beschreibung

Die vorliegende Erfindung betrifft das Gebiet des kontaktlosen Auslesens von Informationen und insbesondere das kontaktlose Auslesen von Informationen aus Transpondern.

Transponder sind Mikrobaulemente, die ein Speichern elektronischer Daten, sowie ein Auslesen und Beschreiben derselben ermöglichen. Aufgrund der Fortschritte in der Mikroelektronik können Transponder heute als sehr dünne Mikrobauelemente hergestellt werden. Insbesondere ergibt sich durch die dünne Bauweise der Transponder eine Flexibilität, die sich günstig auf die Anwendungseigenschaften auswirkt. Dadurch können Transponder beispielsweise in Etiketten eingearbeitet werden, wodurch sich viele attraktive Anwendungsmöglichkeiten eröffnen.

Beispielsweise können Transponder an Waren und anderen Objekten angebracht werden, um Waren-Informationen und andere zusätzliche Informationen zu erhalten und entsprechend weiterzuverarbeiten. Beispiele solcher Anwendungen im alltäglichen Warenverkehr umfassen eine Kennzeichnung bzw. Identifikation von Paketen oder anderen Versandobjekten und eine Sortierung derselben durch ein Auslesen der Adresseninformationen. Ein weiteres alltägliches Anwendungsgebiet umfaßt die Kennzeichnung von Waren beispielsweise im Einzelhandel, um Preiskontrollen, Lagertransfers oder Inventurverwaltungen durchzuführen. Im Lager- und Vertriebsverkehr umfaßt eine Anwendung von Transpondern das Verfolgen von Gütern beim Transport oder Eingang derselben, eine Auftragsannahme, ein Einlagern und Auflösen von Beständen sowie einen Lagertransfer bei Inventuren.

Bei all diesen Anwendungen werden die Informationen auf eine kontaktlose Weise ausgelesen oder Manipulationen der Informationen durch ein Schreiben auf die Transponder durchgeführt, wobei ein Auslese-Vorgang typischerweise mit einem Anzeigen der Informationen für den Benutzer gekoppelt ist.

Ein Auslesen bzw. ein Schreiben von Informationen auf einen Transponder wird durch eine geeignete Lese-Einrichtung bzw. Lese/Schreib-Einrichtung durchgeführt, die typischerweise eine Antennenanordnung und eine Lese-Vorrichtung aufweist. Die Lese-Vorrichtung, die mit der Antenneneinrichtung verbunden ist, dient hauptsächlich dazu, die von dem Transponder ausgelesenen Informationen auf einer Anzeige oder dergleichen anzuzeigen.

Die Antenneneinrichtung erzeugt ein Hochfrequenzfeld, in dessen Nahfeld die Transponder zum Auslesen oder Manipulieren der Informationen gebracht werden müssen. Je nach Anwendung kann die Antenneneinrichtung stationär oder tragbar sein, wobei bei einer stationären Anordnung der Antenne die Transponder aufweisenden Waren, Pakete usw. durch einen geeigneten Beförderungsmechanismus in das Nahfeld der Antenne gebracht werden müssen.

Bekannte tragbare Transponderleseeinrichtungen sind aufgebaut, indem ein Benutzer ein tragbares Gerät, daß eine Antennenanordnung aufweist, die mit einer Lesevorrichtung in Verbindung steht, mit der Hand greift und in die Nähe der Transponder, die beispielsweise an den Waren oder Paketen angebracht sind, bringt, um einen Auslesevorgang durchzuführen.

Dieses Verfahren weist den Nachteil auf, daß ein Benutzer durch das Halten der Antenneneinrichtung lediglich eine, bzw. in dem Fall, bei dem der Benutzer mit der anderen Hand zusätzlich die Lesevorrichtung hält, keine Hand mehr frei hat, um eventuell andere Gegenstände oder die Ware, an der der Transponder angebracht ist, zu greifen.

Die Aufgabe der vorliegenden Erfindung besteht darin, eine tragbare Transponderleseeinrichtung zu schaffen, die es ermöglicht, daß ein Benutzer auf eine vorteilhafte Weise ein Auslesen von Informationen aus Transpondern durchführt.

Diese Aufgabe wird durch eine tragbare Transponderleseeinrichtung gemäß Anspruch 1 gelöst.

Ein Vorteil der vorliegenden Erfindung besteht darin, daß der Benutzer beim Auslesen der Informationen beide Hände frei hat.

Ein weiterer Vorteil der vorliegenden Erfindung besteht darin, daß der Auslesevorgang durchgeführt werden kann, ohne daß ein genaues Zielen auf den Transponder erforderlich ist.

Ein weiterer Vorteil der vorliegenden Erfindung besteht darin, daß das Handhaben von Objekten durch die tragbare Transponderleseeinrichtung nicht gestört ist.

Die vorliegende Erfindung schafft eine tragbare Transponderleseeinrichtung mit folgenden Merkmalen:
einem Handschuh, der eine Antenneneinrichtung aufweist, die eine Antenne umfaßt, die in ein Material des Handschuhs eingebracht ist; und
einer Lesevorrichtung, die mit der Antenneneinrichtung verbunden ist.

Ein bevorzugtes Ausführungsbeispiel der vorliegenden Erfindung weist eine tragbare Transponderleseeinrichtung mit einem Handschuh und einer Lesevorrichtung auf. Der Handschuh umfaßt eine Antenneneinrichtung, die eine Antenne und eine Anpaßvorrichtung umfaßt. Die Antenne, die bei dem bevorzugten Ausführungsbeispiel eine flache Antennenschleife ist, ist in ein Material des Handschuhs eingebracht und auf der Handinnenseite des Handschuhs angeordnet, während die Anpaßvorrichtung, die bei dem bevorzugten Ausführungsbeispiel eine flache und flexible Form aufweist, auf der Handrückseite des Handschuhs angeordnet ist.

Bei einem am meisten bevorzugten Ausführungsbeispiel weist der Handschuh keine Finger auf, während bei einem anderen Ausführungsbeispiel der Handschuh mit Fingern ausgebildet ist, wobei die Antennenschleife in einer Fingerkuppe des Handschuhs angeordnet sein kann.

Bei einem weiteren Ausführungsbeispiel umfaßt die tragbare Transponderleseeinrichtung ferner einen Taster, der von einem Finger des Benutzers betätigt werden kann, um einen Identifizierungsvorgang auszulösen.

Die Lesevorrichtung ist bei bevorzugten Ausführungsbeispielen vorgesehen, um an einem Körperteil eines Benutzers, beispielsweise einem Arm, oder einem Gürtel des Benutzers lösbar befestigbar zu sein.

Weiterbildungen der vorliegenden Erfindung sind in den anhängigen Ansprüchen dargelegt.

Bevorzugte Ausführungsbeispiele der vorliegenden Erfindung werden nachfolgend unter Bezugnahme auf die beiliegenden Zeichnungen näher erläutert. Es zeigen:

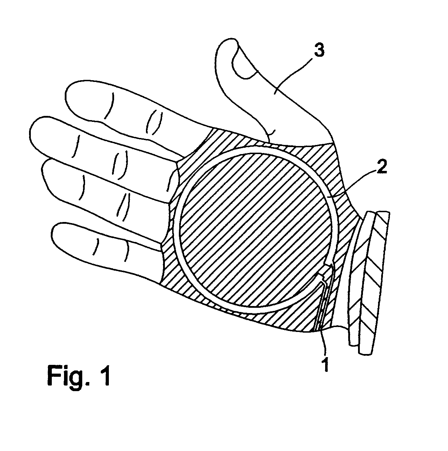

- Fig. 1: eine Darstellung eines Handschuhs gemäß einem bevorzugten Ausführungsbeispiel der vorliegenden Erfindung; und

Fig. 1 zeigt einen Handschuh 1 eines bevorzugten Ausführungsbeispiels der vorliegenden Erfindung. Der Handschuh 1, der bei diesem Ausführungsbeispiel ohne Finger gebildet ist, weist eine dünne Antennenschleife 2 auf, die in das Material des Handschuhs 1 eingearbeitet ist. Der Handschuh 1 kann beispielsweise aus einem Stoff, Leder oder anderen bekannten Materialien für Textilien hergestellt sein. Die Antennenschleife 2, die typischerweise aus einem dünnen Metalldraht gebildet ist, ist an der Handinnenseite des Handschuhs 1 angeordnet.

Die Antennenschleife 2 ist über eine elektrisch leitende Verbindung, die ebenfalls in dem Handschuhmaterial verläuft, mit einem Anpaßnetzwerk (das nicht gezeigt ist) verbunden, das auf der Handrückseite des Handschuhs 1 angeordnet ist.

Das Anpaßnetzwerk, das beispielsweise eine Dünschicht-Schaltungplatine umfassen kann, weist eine flache und flexible Form auf und ist über eine elektrisch leitende Hochfrequezleitung mit einer Lesevorrichtung verbunden. Wie es im Stand der Technik bekannt ist, ist das Anpaßnetzwerk entworfen und aufgebaut, um eine Impedanzanpassung zwischen der Hochfrequenzleitung und der Antennenschleife 2 durchzuführen. Die Versorgungsspannung für die Schaltungselemente des Anpaßnetzwerk wird dabei über die Hochfrequenzverbindung eingespeist.

Die Lesevorrichtung kann auf eine lösbare Weise an einem Körperteil des Benutzers oder einem Kleidungsstück desselben befestigt werden, wobei die Befestigung am Arm des Benutzers über einen Riemen erfolgen kann. Die Leseeinrichtung kann eine Leistungsquelle zum Liefern einer elektrischen Leistung an die Antenne und eine Anzeigevorrichtung umfassen, um ausgelesene Informationen für den Benutzer anzuzeigen. Ferner kann die Leseeinrichtung auch als eine Lese/Schreib-Einrichtung ausgebildet sein, wobei in diesem Fall die Lese/Schreib-Einrichtung zusätzlich eine Tastatur oder eine andere Eingabevorrichtung aufweisen kann.

Um einen Auslesevorgang bzw. Manipulationsvorgang durchzuführen, schlüpft der Benutzer mit einer Hand 3 in den Handschuh 1, und bringt denselben in die Nähe des Transponders, von dem die Informationen ausgelesen werden sollen. Aufgrund der großflächigen Anordnung der Antennenschleife 2 braucht der Benutzer dabei kein exaktes Positionieren und Zielen bezüglich des Transponders durchzuführen, wie es beispielsweise bei einem Auslesesystem auf einer Laserstrahlbasis zum Auslesen eines Strichbarcodes erforderlich ist. Der Benutzer braucht lediglich die Antennenschleife 2 in die Nähe des Transponders zu bringen, derart, daß der Transponder in einem Bereich des Nahfelds des von der Antennenschleife 2 erzeugten Hochfrequenzfelds liegt, das vorzugsweise eine Frequenz in einem Bereich von 12 bis 14 MHz und am meisten bevorzugt eine Frequenz von 13,56 MHz aufweist. Da die Antennenschleife 2 gemäß Fig. 1 jedoch den ganzen Bereich der Handinnenfläche umschließt, ist für den Benutzer ein Positionieren zum Durchführen eines Auslesevorgangs gegenüber einem herkömmlichen tragbaren Auslesesystem auf Basis eines Lasers wesentlich erleichtert.

Durch die Anordnung der Antenne in einem Handschuh 1, hat der Benutzer beide Hände frei, um während eines Lesevorgangs oder zwischen zwei Lesevorgängen Gegenstände, wie beispielsweise eine den auszulesenden Transponder aufweisende Ware oder ein Paket, oder andere Gegenstände zu greifen und/oder zu bewegen. Der Benutzer wird durch die Antennenschleife 2 nicht behindert, da dieselbe in das Handschuhmaterial eingearbeitet ist und eine flache und flexible Form aufweist. Ferner stellt das Anpassungsnetzwerk, das ebenso eine flache und flexible Form aufweist und auf dem Handrücken des Handschuhs 1 angeordnet ist, keine Beeinträchtigung für den Benutzer dar.

Bei einem weiteren Ausführungsbeispiel kann wahlweise ein Taster in den Handschuh 1 integriert sein, wobei derselbe durch einen Finger eines Benutzers, vorzugsweise durch den Daumen, betätigt werden kann, um den Identifikationsvorgang gezielt auszulösen. Dieses Ausführungsbeispiel erlaubt somit eine eindeutige Zuordnung mit dem Objekt. Die elektrische Versorgung des integrierten Taster erfolgt dabei über die obig erwähnte elektrische Verbindung zwischen der Antenne und der Lesevorrichtung mittels einer Gleichspannungseinkopplung.

Die Antennenschleife 2 kann gemäß einem weiteren Ausführungsbeispiel eine abgeschirmte Antennenschleife 2 aufweisen, um eine kapazitive Beeinflussung durch die Hand des Benutzers zu unterdrücken.

Ferner kann die Antennenschleife 2 bei einem weiteren Ausführungsbeispiel, bei dem der Handschuh 1 mit Fingern ausgebildet ist, in der Fingerkuppe des Handschuhs 1 untergebracht sein. Durch die Anordnung in der Fingerkuppe weist die Antennenschleife 2 eine geringere Fläche als bei der Anordnung am Handrücken auf, wodurch sich die Reichweite des von der Antenne erzeugten Nahfelds und folglich die Reichweite des Auslesens von Informationen reduziert. Umgekehrt erlaubt die geringere Reichweite jedoch ein gezielteres Auslesen, was insbesondere in dem Fall günstig ist, bei dem auszulesende Transponder nahe zueinander angeordnet sind.

Obwohl ein bevorzugtes Ausführungsbeispiel der vorliegenden Erfindung eine Verwendung einer Leseeinrichtung beschreibt, um Daten aus einem Transponder auszulesen, kann bei der vorliegenden Erfindung ferner eine Lese/Schreib-Einrichtung verwendet werden, um Daten aus dem Transponder auszulesen und/oder Daten auf denselben zu schreiben. Dabei kann die Lese/Schreib-Einrichtung ferner beispielsweise eine Tastatur oder eine andere Eingabeeinrichtung aufweisen, um Informationen einzugeben.

## Patentansprüche

1. Tragbare Transponderleseeinrichtung mit folgenden Merkmalen:
einem Handschuh (1), der eine Antenneneinrichtung aufweist, die eine in ein Material des Handschuhs (1) eingebrachte Antenne umfaßt;
einer Lesevorrichtung, die mit der Antenneneinrichtung verbunden ist.

2. Tragbare Transponderleseeinrichtung gemäß Anspruch 1, bei der die Antenne ferner eine flache Anpaßvorrichtung aufweist.

3. Tragbare Transponderleseeinrichtung gemäß Anspruch 1 oder 2, bei der die Lesevorrichtung an einem Körperteil eines Benutzers lösbar befestigt werden kann.

4. Tragbare Transponderleseeinrichtung gemäß einem der Ansprüche 1 bis 3, bei der die Antenne eine Antennenschleife (2) ist.

5. Tragbare Transponderleseeinrichtung gemäß einem der Ansprüche 1 bis 4, die ferner einen Taster aufweist, der von einem Finger des Benutzers betätigbar ist, um einen Identifizierungsvorgang auszulösen.

6. Tragbare Transponderleseeinrichtung gemäß einem der Ansprüche 1 bis 5, bei der die Antennenschleife (2) auf der Handinnenseite des Handschuhs (1) angeordnet ist.

7. Tragbare Transponderleseeinrichtung gemäß einem der Ansprüche 1 bis 6, bei der die Anpaßvorrichtung auf der Handrückseite des Handschuhs (1) angeordnet ist.

8. Tragbare Transponderleseeinrichtung gemäß einem der Ansprüche 1 bis 7, bei der bei dem Handschuh (1) Finger ausgebildet sind.

9. Tragbare Transponderleseeinrichtung gemäß einem der Ansprüche 1 bis 7, bei der der Handschuh (1) keine Finger aufweist.

10. Tragbare Transponderleseeinrichtung gemäß einem der Ansprüche 1 bis 8, bei der die Antenne an einer Fingerkuppe des Handschuhs (1) angeordnet ist.

11. Tragbare Transponderleseeinrichtung gemäß einem der Ansprüche 1 bis 10, bei der die Antenne eine abgeschirmte Antennenschleife aufweist, um eine kapazitive Beeinflussung durch die Hand des Benutzers zu reduzieren.

12. Tragbare Transponderleseeinrichtung gemäß einem der Ansprüche 1 bis 11, bei der die Verbindung zwischen der Leseeinrichtung und der Antenneneinrichtung eine Verbindung über ein elektrisches Kabel aufweist.

13. Tragbare Transponderleseeinrichtung gemäß einem der Ansprüche 1 bis 12, bei der das Material des Handschuhs (1) Stoff oder Leder ist.

14. Tragbare Transponderleseeinrichtung gemäß einem der Ansprüche 1 bis 13, bei der die Leseeinrichtung entweder an einem Arm oder einem Gürtel des Benutzers befestigbar ist.

15. Tragbare Transponderleseeinrichtung gemäß einem der Ansprüche 1 bis 14, bei der die Leseeinrichtung eine Lese/Schreibeinrichtung ist.

16. Tragbare Transponderleseeinrichtung gemäß einem der Ansprüche 1 bis 15, bei der die Anpaßvorrichtung flexibel ist.
